(19) Europäisches Patentamt
European Patent Office
Office européen des brevets

(11) EP 3 098 582 A1

(12) # EUROPÄISCHE PATENTANMELDUNG

(43) Veröffentlichungstag:
**30.11.2016 Patentblatt 2016/48**

(51) Int Cl.:
***G01K 1/02*** *(2006.01)*

(21) Anmeldenummer: **16001191.2**

(22) Anmeldetag: **25.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **26.05.2015 DE 102015108212**

(71) Anmelder: **KNORR-BREMSE Systeme für Nutzfahrzeuge GmbH**
**80809 München (DE)**

(72) Erfinder: **Mederer, Martin**
**D-92318 Neumarkt (DE)**

(74) Vertreter: **Schönmann, Kurt**
**Knorr-Bremse AG**
**Patentabteilung - V/RG**
**Moosacher Strasse 80**
**80809 München (DE)**

(54) **VORRICHTUNG UND VERFAHREN ZUR ERFASSUNG VON TEMPERATURDATEN VON LADEGUT**

(57) Eine Vorrichtung zur Erfassung von Temperaturdaten von Ladegut (350) auf einer Ladefläche (110) eines Nutzfahrzeuges und zur Übermittlung der erfassten Temperaturdaten an einen externen Server (120) umfasst die folgenden Merkmale: zumindest ein Sensormodul (200) mit jeweils einem Temperatursensor (201) und einem Funkmodul (203), wobei das zumindest eine Sensormodul (200) an der Ladefläche (110) des Fahrzeugs fixierbar und ausgebildet ist, um die Temperatur des Ladeguts (350) zu erfassen, und das Funkmodul (203) ausgebildet ist, um die erfassten Temperatur drahtlos zu übertragen; und ein Steuermodul (300), das an dem Nutzfahrzeugs anbringbar ist und einen Datenspeicher aufweist. Das Steuermodul (300) ist ausgebildet, um die von dem Funkmodul (203) übertragenen Daten zu empfangen, zu speichern und drahtlos an den externen Server (120) zu übermitteln.

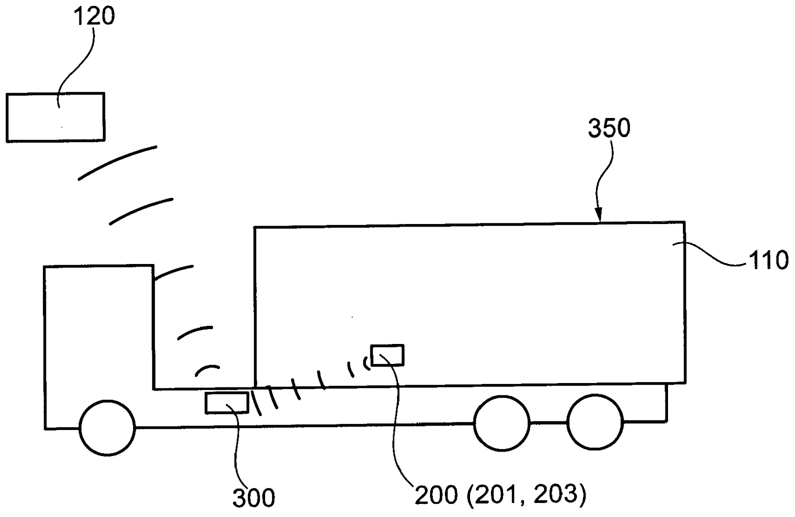


Fig. 1

EP 3 098 582 A1

Printed by Jouve, 75001 PARIS (FR)

## Beschreibung

Die vorliegende Erfindung bezieht sich auf eine Vorrichtung und ein Verfahren zur Erfassung von Temperaturdaten und insbesondere auf eine Temperaturmessung für Asphalt-Transportfahrzeugen.

### Hintergrund

Mischgut wie beispielsweise Asphalt wird u. a. für den Straßenbau eingesetzt und in der Regel zentral in eine Mischeinrichtung hergestellt und anschließend mittels Transportfahrzeugen (Kipper) zur Baustelle transportiert. Das Mischgut verlässt die Mischeinrichtung (oder einen Silo) mit einer Ausgangstemperatur, die während des Transportes zur Baustelle nicht unterhalb einer Mindesttemperatur fallen sollte, um das Mischgut verarbeiten zu können. Um dies sicherzustellen, ist die Ladefläche des Kippers meist thermisch isoliert. Außerdem wird die Temperatur des Mischguts auf der Ladefläche mehrfach gemessen und der Temperaturabfall entsprechend verfolgt, um eine vorgeschriebene Mischguttemperatur zu Qualitätszwecken einzuhalten.

Bei konventionellen Transportfahrzeugen sind dazu Temperatursensoren entlang der Ladefläche verteilt angeordnet, die über Signalleitungen mit einer zentralen Steuereinrichtung außerhalb der Ladefläche verbunden sind. Das zentrale Steuermodul erfasst und überwacht die Temperatur des Mischgutes. Hierbei müssen die Signalleitungen zu den Sensoren durch die drehbare Ladeflächenhalterung hindurch verlegt werden, um zu dem zentralen Steuermodul zu gelangen. Diese Vorgehensweise ist jedoch fehleranfällig, da bei der Verlegung der Drähte durch die Aufhängung der Ladefläche häufig Schäden an den Signalleitungen auftreten, die zu einem Verlust von einem oder mehreren Sensorsignalen führen.

Der vorliegenden Erfindung liegt die Aufgabe zugrunde, eine Vorrichtung zu schaffen, die die obengenannten Nachteile überwindet und eine sichere und zuverlässige Temperaturerfassung von Ladegut auf einer Ladefläche von Nutzfahrzeugen ermöglicht.

### Zusammenfassung

Die oben genannte Aufgabe wird durch eine Vorrichtung nach Anspruch 1 und ein Verfahren nach Anspruch 14 gelöst. Die abhängigen Ansprüche beziehen sich auf vorteilhafte Weiterbildungen der Gegenstände der unabhängigen Ansprüche.

Die vorliegende Erfindung bezieht sich auf eine Vorrichtung zur Erfassung von Temperaturdaten von Ladegut auf einer Ladefläche eines Nutzfahrzeuges und zur und Übermittlung der erfassten Temperaturdaten an einen externen Server. Die Vorrichtung umfasst: zumindest ein Sensormodul mit jeweils einem Temperatursensor und einem Funkmodul, wobei das Sensormodul an der Ladefläche des Fahrzeugs fixierbar und ausgebildet ist, um die Temperatur des Ladeguts zu erfassen, und das Funkmodul ausgebildet ist, um die erfassten Temperatur drahtlos zu übertragen. Außerdem umfasst die Vorrichtung ein Steuermodul, das an dem Nutzfahrzeug anbringbar ist und einen Datenspeicher aufweist. Das Steuermodul ist ausgebildet, um die von dem Funkmodul übertragenen Daten zu empfangen, zu speichern und drahtlos an den externen Server zu übermitteln.

Im Rahmen der vorliegenden Erfindung soll der Begriff Fahrzeug nicht nur auf ein Kraftfahrzeug beschränkt sein. Insbesondere sollen alle Mittel umfasst sein, die für einen Transport von Ladegut unmittelbar oder mittelbar geeignet sind. Dazu gehören u.a. ein Trailer oder deren Zugmaschine, ein Anhänger, ein Sattelzug oder ein Kipper.

In weiteren Ausführungsbeispielen umfasst das zumindest eine Sensormodul mehrere Sensormodule, die an einem Boden und/oder zumindest einer Seitenwand der Ladefläche anbringbar sind.

In weiteren Ausführungsbeispielen umfassen die mehreren Sensormodule vier Sensormodule, wovon beispielsweise zwei jeweils an einer Seitenwand der Ladefläche anbringbar sind, oder fünf Sensormodule, wovon beispielsweise zwei jeweils an einer Seitenwand der Ladefläche anbringbar sind und eines an einer Bodenfläche der Ladefläche anbringbar ist.

In weiteren Ausführungsbeispielen ist das Steuermodul ausgebildet, um eine drahtlose Verbindungsmöglichkeit (z. B. WLAN; wireless local area network) zu detektieren, eine drahtlose Verbindung herzustellen und die gespeicherten Daten über die hergestellte Verbindung an den externen Server zu übermitteln.

In weiteren Ausführungsbeispielen ist das Steuermodul weiter ausgebildet, um die gespeicherten Daten an ein mobiles Endgerät zu übermitteln.

In weiteren Ausführungsbeispielen ist das Steuermodul weiter ausgebildet, um die Temperaturdaten in einem Zeitraum mehrfach zu erfassen und Folgendes jeweils zu speichern: die Temperatur des Ladegutes und/oder eine Zeit der Temperaturerfassung und/oder ein Datum der Temperaturerfassung und/oder eine Fahrzeugidentifikation des Nutzfahrzeuges.

In weiteren Ausführungsbeispielen ist das Steuermodul weiter ausgebildet, um einen Mittelwert (z. B. arithmetischen Mittelwert) aus einer Vielzahl von Messungen, die zu unterschiedlichen Zeitpunkten und/oder von unterschiedlichen Temperatursensoren erfasst wurden, zu ermitteln.

In weiteren Ausführungsbeispielen ist das Steuermodul weiter ausgebildet, um aus den Temperaturdaten eine Temperatur in einer Mindesttiefe innerhalb des Ladegutes, gemessen von der Ladefläche, zu bestimmen. Optional kann diese Berechnung auch von den Sensormodulen durchgeführt werden.

In weiteren Ausführungsbeispielen umfasst das zumindest eine Sensormodul einen Energiespeicher, um den Temperatursensor und das Funkmodul mit Energie zu versorgen. Optional kann weiter eine Vorverarbeitungseinheit in jedem oder einigen Sensormodulen umfasst sein, um eine Vorverarbeitung der erfassten Temperaturdaten durchzuführen.

In weiteren Ausführungsbeispielen umfasst die Ladefläche eine Seitenwand, eine Vorderwand und ein Rückklappe und weist eine Höhe auf, wobei das zumindest eine Sensormodul an der Seitenwand in einem Bereich zwischen 20 und 40 % der Höhe der Ladefläche (gemessen vom Boden) und/oder in einer Region von 0,2 bis 2 m oder in ca.

1 m (gemessen von der Vorderwand oder von der Rückwand) anbringbar ist.

In weiteren Ausführungsbeispielen ist das zumindest eine Sensormodul in einem Hohlraum einer Isolierung der Ladefläche einsetzbar. Das Funkmodul kann beispielsweise in einer Abdeckung des Hohlraums integriert sein.

Die vorliegende Erfindung bezieht sich ebenfalls auf ein Nutzfahrzeug mit einer Ladefläche und einer zuvor beschriebenen Vorrichtung.

Die vorliegende Erfindung bezieht sich ebenso auf ein mobiles Endgerät mit einem Display (Anzeige) und einer Schnittstelle zur drahtlosen Kommunikation mit einer zuvor beschriebenen Vorrichtung, wobei das mobile Endgerät ausgebildet ist, um die Temperaturdaten drahtlos zu empfangen und auf dem Display darzustellen.

Die vorliegende Erfindung bezieht sich ebenso auf ein Verfahren zur Erfassung von Temperaturdaten von Ladegut auf einer Ladefläche eines Nutzfahrzeuges. Das Verfahren umfasst die folgenden Schritte: Erfassen von Temperaturdaten durch zumindest einen Sensormodul, das in thermischen Kontakt zu dem Ladegut auf der Ladefläche des Nutzfahrzeugs steht; drahtloses Übertragen der Temperaturdaten von dem zumindest einen Sensormodul zu einem Steuermodul, das an dem Nutzfahrzeug befestigt ist; Speichern der übertragenen Temperaturdaten auf einem Datenspeicher in dem Steuermodul; und drahtloses Übermitteln der gespeicherten Temperaturdaten an einen externen Server.

Die genannte Reihenfolge der Schritte impliziert keine zeitliche Abfolge oder nur insoweit, wie es zwingend erforderlich ist. Ebenso können alle Funktionen der zuvor beschriebenen Vorrichtung als Teil des Verfahrens implementiert sein.

Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsformen einschränkt, sondern lediglich der Erklärung und dem Verständnis dienen.

Fig. 1 zeigt eine Vorrichtung gemäß einem Ausführungsbeispiel der vorliegenden Erfindung.

Fig. 2a, b veranschaulichen eine Anbringung von Sensormodulen an einer Ladefläche eines Nutzfahrzeuges.

Fig. 3 stellt ein Systemlayout gemäß einem Ausführungsbeispiel dar.

Fig. 4 zeigt eine Integration eines Sensormoduls in einer Wand der Ladefläche.

Fig. 5 veranschaulicht einen Wärmetransport von einem Ladegut in eine Umgebung.

Fig. 6-8 zeigen verschiedene Ansichten einer Anwendung auf einem mobilen Endgerät zur Darstellung und Auswertung der erfassten Temperaturdaten.

Fig. 9 zeigt ein Flussdiagramm eines Verfahrens gemäß einem Ausführungsbeispiel der vorliegenden Erfindung.

Detaillierte Beschreibung

Fig. 1 zeigt eine Vorrichtung gemäß einem Ausführungsbeispiel der vorliegenden Erfindung. Die Vorrichtung ist insbesondere geeignet zur Erfassung von Temperaturdaten von Ladegut 350 auf einer Ladefläche 110 eines Nutzfahrzeuges und zur Übermittlung der erfassten Temperaturdaten an einen externen Server 120. Die Vorrichtung umfasst: zumindest ein Sensormodul 200 mit jeweils einem Temperatursensor 201 und einem Funkmodul 203, wobei das zumindest eine Sensormodul 200 an der Ladefläche 110 des Fahrzeugs fixierbar und ausgebildet ist, um die Temperatur des Ladeguts 350 zu erfassen. Das Funkmodul 203 ist ausgebildet, um die erfassten Temperatur drahtlos zu übertragen. Die Vorrichtung umfasst weiter ein Steuermodul 300, das an dem Nutzfahrzeugs anbringbar ist und einen Datenspeicher aufweist. Das Steuermodul 300 ist ausgebildet, um die von dem Funkmodul 203 übertragenen Daten zu empfangen, zu speichern und drahtlos an den externen Server 120 zu übermitteln.

Die Fig. 2a zeigt eine Raumansicht einer beispielhaften Ladefläche 110 (z. B. eine Kippmulde) eines Nutzfahrzeuges und die Fig. 2b zeigt eine Querschnittsansicht durch die Ladefläche 110 senkrecht zur Fahrtrichtung.

Die Ladefläche 110 weist eine Rückklappe 111 und dazu gegenüberliegend eine Vorderwand 112 auf. Zwischen der Rückklappe 111 und der Vorderwand 112 ist eine erste Seitenwand 113 und eine zweite Seitenwand 114 angeordnet, wobei die erste Seitenwand 113 beispielsweise rechts in Fahrtrichtung und die zweite Seitenwand 114 links zur Fahrtrichtung liegen kann. Außerdem ist die Ladefläche 110 durch eine Bodenwand 115 von unten begrenzt. Die Rückklappe 111 ist beispielsweise ausgebildet, um beim Abkippen des Ladegutes (in Fig. 2 nicht gezeigt), welches durch die Ladefläche 110 transportiert wird, sich zu öffnen, so dass das Ladegut aus der Ladefläche freigelassen wird.

Die Fig. 2b zeigt eine Querschnittsansicht senkrecht zur Fahrtrichtung, wobei die erste Seitenwand 113 und die zweite Seitenwand 114 zu sehen sind, die durch die Bodenwand 115 an der unteren Seite verbunden sind.

In dem Ausführungsbeispiel der Fig. 2 sind insgesamt fünf Sensormodule 200 mit Temperatursensoren (nicht zu sehen) angeordnet: ein erstes Sensormodul 210, ein zweites Sensormodul 220, ein drittes Sensormodul 230, ein viertes Sensormodul 240 und ein fünftes Sensormodul 250. Das erste Sensormodul 210 ist in einem hinteren Teil der zweiten Seitenwand 114 und das fünfte Sensormodul 250 an einem vorderen Teil der zweiten Seitenwand 114 angeordnet. Das zweite Sensormodul 220 ist an einem hinteren Teil der ersten Seitenwand 113 und das vierte Sensormodul 240 ist an einem vorderen Teil der zweiten Seitenwand 113 angeordnet. Das dritte Sensormodul 230 ist an der Bodenwand 115 angeordnet. Der hintere Teil der ersten und zweiten Seitenwand 113, 114 bezeichnet beispielsweise die hintere Hälfte, die sich hin zu der Rückklappe 111 erstreckt und der vordere Teil bezeichnet beispielsweise die vordere Hälfte, die sich hin zu der Vorderwand 112 erstreckt.

Das erste Sensormodul 210 und das zweite Sensormodul 220 können beispielsweise in einem Bereich von 0,2 bis 2 m (oder ungefähr 1 m ± 20%) von der Rückklappe 111 angeordnet werden. Das vierte Sensormodul 240 und das fünfte Sensormodul 250 können in einem Bereich von 0,2 bis 2 m (oder ungefähr 1 m ± 20%) von der Vorderwand 112 angeordnet werden. Das erste Sensormodul 210, das zweite Sensormodul 220, das vierte Sensormodul 240 und das fünfte Sensormodul 250 sind beispielsweise in einer Höhe (gemessen von der Bodenwand 115) zwischen 20% und 40% (oder ungefähr 33 %) einer Gesamthöhe H der Ladefläche angeordnet. Das dritte Sensormodul 230 kann beispielsweise in einem Mittenbereich der Bodenwand 115 angeordnet sein.

Bei weiteren Ausführungsbeispielen sind lediglich vier Sensormodule 200 an der Ladefläche 110 befestigt, d.h. eines der fünf Sensormodule ist nicht vorhanden. Beispielsweise braucht das dritte Sensormodul 230 nicht vorhanden sein. Es können aber auch andere Konfigurationen von Sensormodulen 200 realisiert sein (mit weniger oder noch mehr Sensormodulen).

Die Sensormodule 210, 220, 230, 240, 250 koppeln über eine Drahtlosverbindung mit dem zentralen Steuermodul (Steuermodul 300), das in den Fig. 2a, b nicht gezeigt ist. Das zentrale Steuermodul 300 kann beispielsweise an dem Fahrzeug (oder Trailer) befestigt werden. Gemäß der vorliegenden Erfindung werden somit Funkverbindungen zur Übermittlung von Daten genutzt, so dass keine Signalleitungen durch die Scharnierverbindung zwischen der Ladefläche 110 und dem Nutzfahrzeug hindurchgeführt werden müssen.

Das Steuermodul 300 kann beispielsweise, neben den Temperaturdaten von den Sensormodulen 210 bis 250, ebenfalls einen Zeitstempel der jeweiligen Temperaturmessung (für jeden Temperatursensor separat, zum Beispiel), ein Lieferdatum der Lieferung des Mischgutes und eine Fahrzeugidentifikation erfassen und/oder abspeichern.

Das Steuermodul 300 kann weiter ein Speichermedium aufweisen, welches die Temperaturdaten und die optionalen zusätzlichen Informationen abspeichert. Außerdem kann das Steuermodul 300 eine Datenverarbeitungseinheit (z. B. einen Mikroprozessor) umfassen, die beispielsweise ausgebildet ist, um eine Verarbeitung der Temperaturdaten durchzuführen. Zum Beispiel kann ein Mittelwert aus den Daten von dem Sensormodulen 200 (z. B. aus den vier oder fünf Sensormodulen) oder von Mehrfachmessungen über eine Zeitperiode gebildet werden. Ebenso kann eine Temperaturverfolgung erfolgen. Dazu kann das Steuermodul in regelmäßigen Abständen neue Messungen durchführen und diese entsprechend abspeichern und so eine Temperaturkurve ermitteln, die einen Temperaturverlauf bei der Abkühlung des Mischgutes während des Transportes zeigen. Die Datenaufzeichnung kann dabei digital oder auch analog erfolgen.

Beim Transport des Mischgutes von dem Mischer bzw. von einem Silo hin zur Baustelle fällt die Temperatur kontinuierlich ab, wobei für Qualitätszwecke ein bestimmter Temperaturbereich während des Transportes eingehalten werden sollte. Beispielsweise liegt dieser Temperaturbereich bei Guss-Asphalt zwischen 200°C und 250°C, wobei die untere Grenze für das abgeladene Mischgut gilt und die obere Grenze für das Verlassen des Mischgutes von dem Mischer bzw. von dem Silo. Bei anderen Asphalttypen kann dieser Bereich variieren. Beispielsweise ist der Bereich bei Asphaltbeton zwischen 130°C und 180°C oder zwischen 120°C bis 170°C (abhängig von dem Bindemittel in dem Mischgut). Bei Asphaltmastix liegt dieser Bereich beispielsweise zwischen 180°C und 220°C (oder zwischen 170°C und 210°C) und bei Tragdeckschichtmischgut zwischen 120°C und 180°C oder zwischen 100°C und 170°C. Bei Asphaltbeton (im Warmbau) liegt dieser Bereich zwischen 60°C und 130°C. Bei polymermodifiziertem Bitumen (PmB) entsprechen die zulässigen Mischguttemperaturen den jeweiligen Grenzwerten, die für die Straßenbaubitumen angegeben sind. Bei Splittmastixasphalt mit PmB 45 beträgt die niedrigste und höchste zulässige Temperatur des Mischgutes 150°C bzw. 180°C. Diese Werte dienen lediglich der Illustration. Bei anderem Mischgut können diese Werte jedoch anders sein.

Bei weiteren Ausführungsbeispielen wird die Vorrichtung zur Erfassung von Temperaturdaten in einem System integriert, wie es beispielsweise in der Fig. 3 zu sehen ist. Dazu werden die Temperaturdaten von den Sensormodulen 210 bis 250 erfasst, die entlang der Ladefläche 110 an den Punkten 1, 2,...,5 angeordnet sind (z. B. wie in der Fig. 2). Jedes Sensormodul 200 umfasst beispielsweise je eine Temperatursensor 201 und ein Funkmodul 203, die über einen Signalpfad (Signalleitung) miteinander verbunden sind. Bei dem Ausführungsbeispiel der Fig. 3 sind diese Komponenten in je einem TPMS-Sensor (tire pressure monitoring sensor system = Reifendrucküberwachungssensorsystem) untergebracht (bzw. ein solcher Reifendrucksensor kann entsprechend angepasst werden).

Das Funkmodul 203 in dem beispielhaften TPMS-Sensor ist ausgebildet, um die durch den Temperatursensor 201 erfassen Temperaturdaten drahtlos an das Steuermodul 300 zu übertragen. Das Steuermodul 300 kann beispielweise Teil eines Trailer-Elektronische-Bremssystems 310 (z. B. TEBS G2.2) oder eines intelligenten Trailer-Zugriffspunktes 320 (iTAP = inteligent trailer access point) sein, die beispielsweise an eine Antenne 330 (z.B. eine TPMS Smart-Antenne) koppeln und über einen Datenbus (z. B. einen LIN/CAN-Bus oder einen J1939 Bus) miteinander verbunden sind. Die iTAP-Komponente 320 kann beispielsweise ausgebildet sein, um eine drahtlosVerbindung 450 (z.B. als WiFi-Verbindung) zu einem mobilen Endgerät 400 (z.B. eine Mobiltelefon, ein Tablet, Laptop, etc.) herzustellen. Das mobile Endgerät 400 ist beispielsweise ausgebildet, die übermittelten Temperaturdaten entsprechend zu verarbeiten und zum Beispiel in Form einer Tabelle 460 darzustellen.

Das Steuermodul 300 ist ebenfalls ausgebildet, um diese Daten beim Vorhandensein einer drahtlosen Verbindung zu einem externen Server 120 zu übertragen.

Somit ist eine Erweiterung und Integration der erfindungsgemäßen Vorrichtung zur Erfassung von Temperaturdaten als eine Road-Layer-Funktion bzw. eine Integration in einer iTAP-Umgebung möglich. Dies bietet den Vorteil einer kostengünstigen Nutzung der iTAP-Variante zum Einlesen von Temperaturdaten, die von den fünf Sensormodulen 210 bis 250 erfasst wurden. Eine Zwischendatenspeicherung ist in einem weiteren Elektronikmodul (Datenverarbeitungseinheit) möglich (z.B. im iTAP EEPROM). Zur drahtlosen Datenübertragung bestehen folgende Möglichkeiten: z.B. kann der 433 MHz Funkstandard genutzt werden, um die Daten von den Sensormodulen 210, 220 an das Steuermodul 300 zu übertragen. Außerdem kann eine LIN/CAN-Verbindung zwischen einer TPMS Smart-Antenne und dem TEBS; oder eine J1939-Schnittstelle zwischen der TEBS und der iTAP Komponente zur internen Datenübertragung genutzt werden. Eine Wifi-Schnittstelle kann zur Anzeige auf einem Smartphone oder zur Übertragung auf einen externen Server (Computersystem) genutzt werden.

Fig. 4 zeigt eine Detailansicht einer Integration eines Sensormoduls 200 in einer Seitenwand 111 (oder auch der Bodenwand) der Ladefläche 110. Das Sensormodul 200 umfasst einen Temperatursensor 201, ein Funkmodul 203 und eine Verbindungsleitung 204, die den Temperatursensor 201 mit dem Funkmodul 203 verbindet. Der Temperatursensor 201 ist dabei innerhalb einer Isolation 116 der Seitenwand 111 untergebracht. Dazu weist die Isolation 116 einen Hohlraum 119 auf, der für den Temperatursensor 201 Platz bietet. Der Temperatursensor 201 ist in thermischem Kontakt mit dem Ladegut 350, welches von dem Temperatursensor 201 durch eine Trennwand 118 getrennt ist. Die Trennwand 118 ist beispielsweise eine Metallwand, die ausreichend mechanische Stabilität bietet, jedoch gleichzeitig eine gute thermische Leitfähigkeit aufweist, um den Temperatursensor 201 thermisch an das Ladegut 350 zu koppeln. Der Temperatursensor 201 weist eine Ausgabeschnittstelle 202 auf, die an die Verbindungsleitung 204 koppelt, um die erfassten Temperaturdaten an das Funkmodul 203 (nicht in der Fig. 4 gezeigt) weiterzugeben. Das Funkmodul 203 kann beispielsweise in einer Abdeckung 205 integriert sein, die den Hohlraum 119 von außen abdeckt. Damit verbessern sich die Empfangs- und Sendebedingungen des Funkmoduls 203. Außerdem wird das Funkmodul 203 in der Abdeckung 205 besser gekühlt und ist nicht den hohen Temperaturen in der Nähe des Temperatursensors 201 ausgesetzt.

Das Mischgut 350 weist im Allgemeinen ein inhomogenes Temperaturprofil auf, wie es oben in der Fig. 4 zu sehen ist. Das Temperaturprofil zeigt eine nahezu konstante Kerntemperatur T1, die sich ab einem bestimmten Abstand D (beispielsweise 10 cm) von der Seitenwand 118 einstellt. In dem so definierten Übergangsbereich hin zur Seitenwand 118 fällt die Temperatur bis auf eine Wandtemperatur T2 monoton ab, die das Mischgut 350 an der Seitenwand 118 hat. In dem Übergangsbereich mit der Dicke D bildet sich häufig eine Kruste, da die Temperatur unterhalb einer Mindesttemperatur liegt, was zu einer (teilweisen) Erstarrung des Mischguts führt.

Die durch den Temperatursensor 201 erfassten Temperaturdaten werden durch das Funkmodul 203 an das Steuermodul 300 übertragen. Das Steuermodul 300 kann an einer beliebigen Position am Fahrzeug oder dem Trailer angebracht werden, vorzugsweise derart, dass es Temperaturdaten von allen Sensormodulen 200 bzw. den jeweiligen Funkmodulen 203, 213, ... gut empfangen kann. Das Steuermodul 300 ist optional weiter ausgebildet, um basierend auf der gemessenen Wandtemperatur T2 zu ermitteln, welche Kerntemperatur T1 in dem Mischgut 350 vorhanden ist. Um diese Berechnung durchzuführen, sind neben vorhandenen fahrzeugspezifischen Daten (beispielsweise die Qualität der Isolierung 116) auch Daten erforderlich, die das Mischgut 350 betreffen, insbesondere deren thermische Leitfähigkeit. Eine solche Berechnung ist sinnvoll, da die zuvor genannten einzuhaltenden Temperaturbereiche sich in der Regel auf die Kerntemperatur T1 beziehen.

Optional ist es ebenfalls möglich, dass eine Vorverarbeitung der Temperaturdaten durch die jeweiligen Sensormodule 200 selbst durchgeführt wird (z. B. das Ermitteln der Kerntemperatur). Dazu kann jedes oder einige der Sensormodule 200 eine Datenverarbeitungseinheit (nicht gezeigt) aufweisen, die eine Vorverarbeitung der Temperaturdaten durchführen kann. Außerdem kann jedes Sensormodul 200 eine eigene Energieversorgung (nicht gezeigt) aufweisen, die beispielsweise eine Batterie oder einen Akku umfasst. Es ist ebenfalls möglich, die Sensormodule 200 mit der Stromversorgung des Fahrzeugs oder Trailers zu verbinden.

Die Fig. 5 veranschaulicht den Wärmetransport von dem Mischgut 350 an die Umgebung während des Abkühlprozesses. Zum einen kann die Wärme vom Mischgut 350 über eine obere Abdeckung abgeleitet werden, ohne dass eine Seitenwand oder Bodenwand zu passieren wäre. Wie durch den Pfeil 600 dargestellt, ist dies die Hauptursache für den Wärmeverlust. Außerdem wird Wärme über die fünf Seitenwände abgeführt, was durch die Wärmetransportpfeile 610 bis 650 angedeutet ist. Der Umfang des Wärmetransportes durch die Wände hängt von der Isolierung 116 ab. Der Umfang des Wärmetransports über die obere Abdeckung des Mischgutes 350 hängt von der Abdeckung des Transportgutes ab (und von der Umgebungstemperatur). Der Wärmetransport lässt sich durch die folgende Formel ausdrücken:

$$m_{load} c_{load} \frac{dT_{load}}{dt} = \sum_{i=1}^{5} Q_{wall\,i} + Q_{amb}$$

$$m_{load} c_{load} \frac{dT_{load}}{dt} = \sum_{i=1}^{5} k_{wall\,i} A_{wall\,i} \left(T_{wall\,i} - T_{load}\right) + k_{amb} A_{amb} \left(T_{amb} - T_{load}\right)$$

$$T_{load}(t_0) = T_0 \qquad T_{wall\,i}, T_{amb} \rightarrow \text{gemessen\&}$$

wobei T die Temperatur, Q die Wärmemenge, m die Masse, c die spezifische Wärmekapazität, A die jeweilige Fläche (über die die Wärme abgeleitet wird) und k die Wärmeleitzahl ist.

Fig. 6-8 zeigen eine beispielhafte Umgebung auf einem mobilen Endgerät 400, um die erfassten Temperaturdaten darzustellen. Das mobile Endgerät 400 kann die Temperaturdaten über eine drahtlose Kommunikationsverbindung 450 von dem Steuermodul 300 erhalten und durch eine entsprechende Applikation auswerten und darstellen.

In der mobilen Applikation kann zunächst der Asphalttyp gewählt werden, wie es in der Fig. 6 zu sehen ist. Beispielsweise kann der Asphalttyp ausgewählt werden aus: Asphaltbinder 701, Asphaltbeton 702, Splittmastixasphalt 703, Gussasphalt 704, Asphaltmix 705 oder Tragdeckschichtmischgut 706. Eine solche Wahl ist sinnvoll, da die verschiedene Asphalttypen unterschiedlicher Temperaturanforderungen erfüllen.

Als Antwort darauf können, wie in der Fig. 7 dargestellt, die jeweiligen Temperaturen den beispielhaften fünf Temperatursensoren 211, 221, 231, 241, 251 zugeordnet werden. In dem gezeigten Beispiel erfasst der erste Temperatursensor 211 eine Temperatur von 161°, der zweite Temperatursensor 221 eine Temperatur von 160°, der dritte Temperatursensor 231 eine Temperatur von 161 °C, der vierte Temperatursensor 241 eine Temperatur von 158°C und der fünfte Temperatursensor 251 eine Temperatur von 162°C. Somit ergibt sich ein Temperaturdurchschnitt (z. B. arithmetisches Mittel) von 160°C, der durch eine Anzeige 710 dargestellt wird.

Die gezeigten Temperaturen sind jedoch lediglich Beispiele, die die graphischen Darstellungsmöglichkeiten der erfassten Temperaturen veranschaulichen sollen. Bei weiteren Ausführungsbeispielen ist es außerdem möglich, dass eine besondere farbliche Darstellung gewählt wird, wenn der Grenzwert nach oben oder unten durchschritten wurde (z. B. ein roter, grüner oder gelber Hintergrund oder eine entsprechende Schriftfarbe). Außerdem kann in der graphischen Benutzeroberfläche ein Startknopf 720 vorgesehen sein, der eine Temperaturaufzeichnung über einen Zeitintervall ermöglicht, so dass die Temperaturen sich fortlaufend ändern.

Die Fig. 8 zeigt ein Beispiel für den Temperaturverlauf, der sich nach dem Betätigen des Startknopfes 720 ergibt. In dem gezeigten Beispiel fällt die Temperatur von einer Anfangstemperatur von 175°C auf eine Temperatur von 160°C in einem Zeitintervall, das um 13:20 Uhr beginnt und um 16:00 Uhr aufllört. In dem gezeigten Beispiel ist der Temperaturverlauf für den arithmetischen Mittelwert gezeigt. Bei anderen Ausführungsbeispielen können ebenfalls die einzelnen Temperatursensoren in ihrem zeitlichen Verlauf dargestellt werden. Die gezeigten Daten können beispielsweise in einem Format abgespeichert werden und zu einer Datenbank übermittelt werden. Wie dargelegt, ist dies beispielsweise durch eine drahtlose Nachrichtenverbindung möglich, wenn sich das Fahrzeug in der Nähe einer drahtlosen Empfangsstation befindet (z.B. ein entsprechender WLAN-Hotspot). Es ist ferner möglich, die Daten einem Fahrer des Fahrzeuges an einem mobilen Endgerät oder einer Anzeige sichtbar zu machen, so dass er ständig Kontrolle über den Temperaturverlauf des Mischgutes hat. Weiter ist es möglich, die aufgezeichneten Daten durch das Steuermodul über die Nachrichtenverbindung (z.B. Mobilfunkverbindung, WLAN-Verbindung, Bluetooth-Verbindung oder jede andere Form von drahtloser Nachrichtenübermittlung) an einen externen Server, der sich nicht in oder an dem Fahrzeug befindet, zu übermitteln. Dazu können entsprechende Auswahlschaltflächen 740 vorgesehen sein, die es einem Nutzer erlauben, die Daten zu exportieren, an den externen Server 120 oder einem anderen Gerät.

Fig. 9 zeigt ein beispielhaftes Flussdiagramm eines Verfahrens gemäß einem Ausführungsbeispiel der vorliegenden Erfindung. Das Verfahren dient zur Erfassung von Temperaturdaten von Ladegut 350 auf einer Ladefläche 110 eines Nutzfahrzeuges. Das Verfahren umfasst die folgenden Schritte: Erfassen S110 von Temperaturdaten durch zumindest ein Sensormodul 200, das in thermischen Kontakt zu dem Ladegut 350 auf der Ladefläche 110 des Nutzfahrzeugs steht; drahtloses Übertragen S120 der Temperaturdaten von dem zumindest einen Sensormodul 200 zu einem Steuermodul 300, das an dem Nutzfahrzeug befestigt ist; Speichern S130 der übertragenen Temperaturdaten auf einem Datenspeicher in dem Steuermodul 300; und drahtloses Übermitteln S140 der gespeicherten Temperaturdaten an einen externen Server 120.

Im Rahmen der vorliegenden Erfindung muss eine elektrische Verbindung nicht notwendigerweise eine direkte elektrische Verbindung umfassen. Vielmehr soll unter einer elektrischen Verbindung alle Mittel verstanden werden, die ein Ausbilden eines Strompfades umfassen, der einen Fluss von elektrischen Ladungsträgern zwischen den Komponenten erlaubt. Der Begriff "Koppeln" ist so auszulegen, dass es jegliche Verbindung umfasst, über die eine Energie transportiert werden kann.

Die in der Beschreibung, den Ansprüchen und den Figuren offenbarten Merkmale der Erfindung können sowohl einzeln als auch in beliebiger Kombination für die Verwirklichung der Erfindung wesentlich sein.

<u>Liste von Bezugszeichen</u>

| | |
|---|---|
| 110 | Ladefläche (Kippmulde) |
| 111 | Rückklappe |
| 112 | Vorderwand |
| 113 | erste Seitenwand |
| 114 | zweite Seitenwand |
| 115 | Bodenwand |
| 116 | Isolation |
| 118 | Trennwand |
| 119 | Hohlraum |
| 120 | externer Server |
| 200, 210,... | Sensormodule |
| 201, 211,... | Temperatursensoren |
| 202, 212,... | Ausgabeschnittstellen der Temperatursensoren |
| 203, 213,... | Funkmodule |
| 204, 214,... | Verbindungsleitungen |
| 205, 215,... | Abdeckungen |
| 300 | Steuermodul |
| 350 | Ladegut |
| 400 | mobiles Endgerät |
| 450 | mobile Datenverbindung |
| 600, 610,... | Wärmetransportpfade |
| 701, 702,... | Asphaltsorten |
| 710 | Durchschnittstemperaturanzeige |
| 720 | Startknopf |

**Patentansprüche**

1. Vorrichtung zur Erfassung von Temperaturdaten von Ladegut (350) auf einer Ladefläche (110) eines Nutzfahrzeuges und zur und Übermittlung der erfassten Temperaturdaten an einen externen Server (120), mit folgenden Merkmalen:

zumindest ein Sensormodul (200) mit jeweils einem Temperatursensor (201) und einem Funkmodul (203),

wobei das zumindest eine Sensormodul (200) an der Ladefläche (110) des Fahrzeugs fixierbar und ausgebildet ist, um die Temperatur des Ladeguts (350) zu erfassen, und das Funkmodul (203) ausgebildet ist, um die erfassten Temperatur drahtlos zu übertragen;
ein Steuermodul (300), das an dem Nutzfahrzeug anbringbar ist und einen Datenspeicher aufweist,
wobei das Steuermodul (300) ausgebildet ist, um die von dem Funkmodul (203) übertragenen Daten zu empfangen, zu speichern und drahtlos an den externen Server (120) zu übermitteln.

2. Vorrichtung nach Anspruch 1, wobei das zumindest eine Sensormodul (200) mehrere Sensormodule (210, 220, ...) umfasst, die an einem Boden (115) und/oder zumindest einer Seitenwand (113, 114) der Ladefläche (110) anbringbar sind.

3. Vorrichtung nach Anspruch 2, wobei die mehreren Sensormodule (200) vier Sensormodule (210, 220, 230, 240) umfassen, wovon zwei jeweils an einer Seitenwand der Ladefläche (110) anbringbar sind, oder fünf Sensormodule (210, 220, 230, 240) umfassen, wovon zwei jeweils an einer Seitenwand der Ladefläche (110) anbringbar sind und eines an einer Bodenfläche (115) der Ladefläche (110) anbringbar ist.

4. Vorrichtung nach einem der vorhergehenden Ansprüche, wobei das Steuermodul (300) ausgebildet ist, um eine drahtlose Verbindungsmöglichkeit zu detektieren, eine WLAN-Verbindung herzustellen und die gespeicherten Daten über die WLAN-Verbindung an den externen Server (120) zu übermitteln.

5. Vorrichtung nach einem der vorhergehenden Ansprüche, wobei das Steuermodul (300) weiter ausgebildet ist, um die gespeicherten Daten an ein mobiles Endgerät (400) zu übermitteln.

6. Vorrichtung nach einem der vorhergehenden Ansprüche, wobei das Steuermodul (300) weiter ausgebildet ist, um die Temperaturdaten in einem Zeitraum mehrfach zu erfassen und Folgendes zu speichern: die Temperatur des Ladegutes (350) und/oder eine Zeit der Temperaturerfassung und/oder ein Datum der Temperaturerfassung und/oder eine Fahrzeugidentifikation des Nutzfahrzeuges.

7. Vorrichtung nach Anspruch 6, wobei das Steuermodul (300) weiter ausgebildet ist, um einen Mittelwert aus einer Vielzahl von Messungen, die zu unterschiedlichen Zeitpunkten und/oder von unterschiedlichen Temperatursensoren (201) erfasst wurden, zu ermitteln.

8. Vorrichtung nach einem der vorhergehenden Ansprüche, wobei das Steuermodul (300) weiter ausgebildet ist, um aus den Temperaturdaten eine Temperatur in einer Mindesttiefe (D) innerhalb des Ladegutes (350), gemessen von einer Trennwand (118) der Ladefläche (110), zu bestimmen.

9. Vorrichtung nach einem der vorhergehenden Ansprüche, wobei das zumindest eine Sensormodul (200) einen Energiespeicher aufweist, um den Temperatursensor (201) und das Funkmodul (203) mit Energie zu versorgen.

10. Vorrichtung nach einem der vorhergehenden Ansprüche, wobei die Ladefläche (110) eine Seitenwand (113, 114), eine Vorderwand (112) und ein Rückklappe (111) umfasst und eine Höhe (H) aufweist, und wobei das zumindest eine Sensormodul (200) an der Seitenwand (113, 114) in einem Bereich zwischen 20% und 40% der Höhe (H) der Ladefläche (110) und/oder in einer Region von 0,2 bis 2m gemessen von der Vorderwand (112) oder von der Rückklappe (111) anbringbar ist.

11. Vorrichtung nach einem der vorhergehenden Ansprüche, wobei das zumindest eine Sensormodul (200) in einem Hohlraum (119) einer Isolierung (116) der Ladefläche (110) einsetzbar ist.

12. Nutzfahrzeug mit einer Ladefläche (110) und einer Vorrichtung nach einem der Ansprüche 1 bis 11.

13. Mobiles Endgerät (400) mit einem Display und einer Schnittstelle zur drahtlosen Kommunikation mit einer Vorrichtung nach einem der Ansprüche 1 bis 11, wobei das mobile Endgerät ausgebildet ist, die Temperaturdaten drahtlos zu empfangen und auf dem Display darzustellen.

14. Verfahren zur Erfassung von Temperaturdaten von Ladegut (350) auf einer Ladefläche (110) eines Nutzfahrzeuges, mit:

Erfassen (S110) von Temperaturdaten durch zumindest einen Sensormodul (200), das in thermischen Kontakt zu dem Ladegut (350) auf der Ladefläche des Nutzfahrzeugs steht;
drahtloses Übertragen (S120) der Temperaturdaten von dem zumindest einen Sensormodul (200) zu einem Steuermodul (300), das an dem Nutzfahrzeug befestigt ist;
Speichern (S130) der übertragenen Temperaturdaten auf einem Datenspeicher in dem Steuermodul (300); und
drahtloses Übermitteln (S140) der gespeicherten Temperaturdaten an einen externen Server (120).

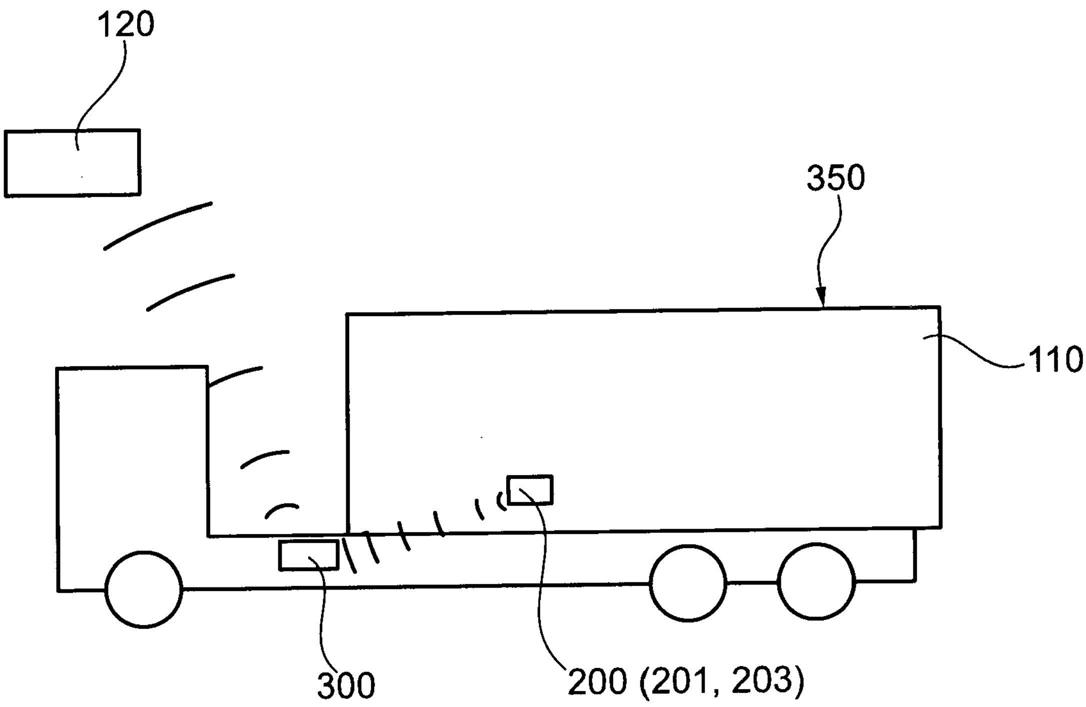


Fig. 1

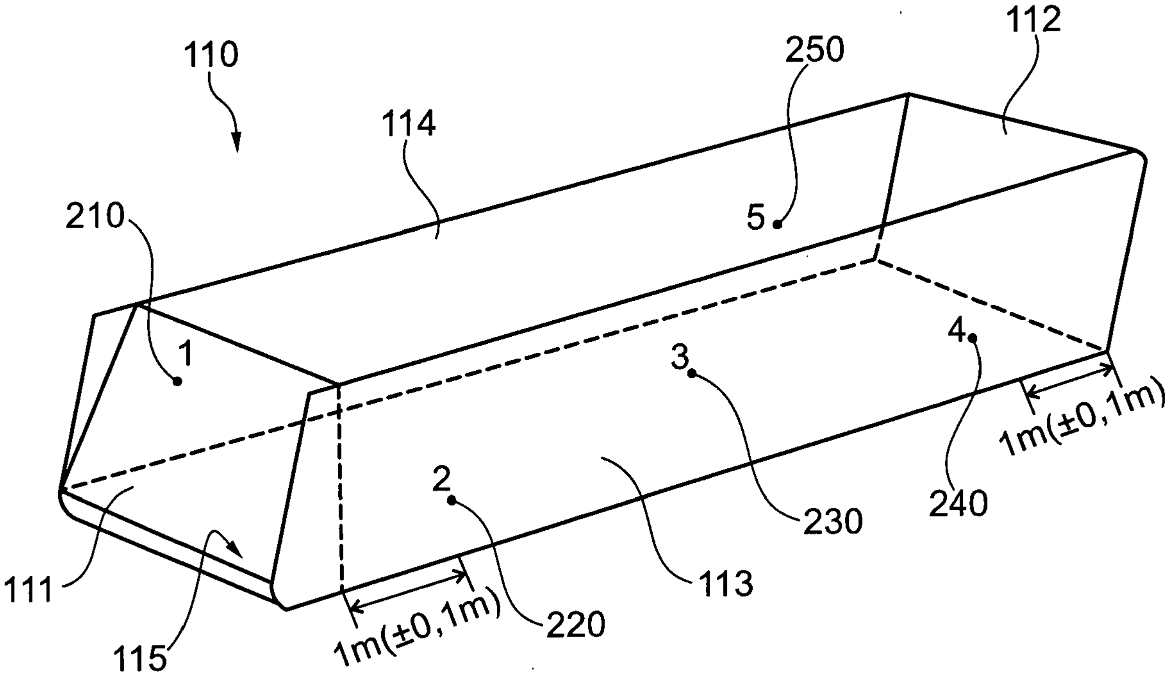
110
114
250
112
210
5
1
3
4
2
1m(±0,1m)
230
240
111
220
113
115
1m(±0,1m)
220

Fig. 2a

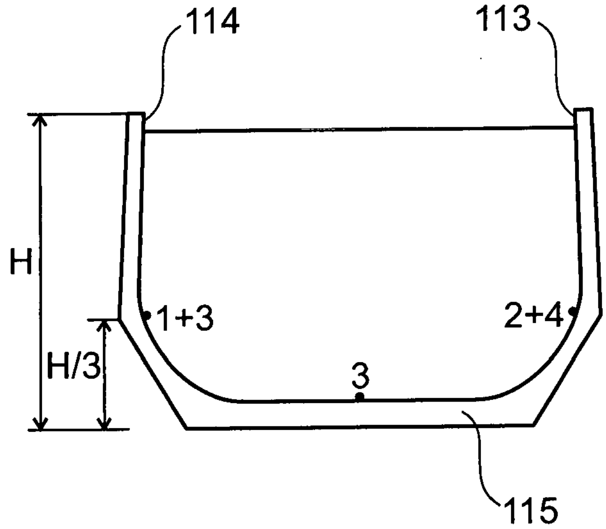
114
113
H
1+3
2+4
H/3
3
115

Fig. 2b

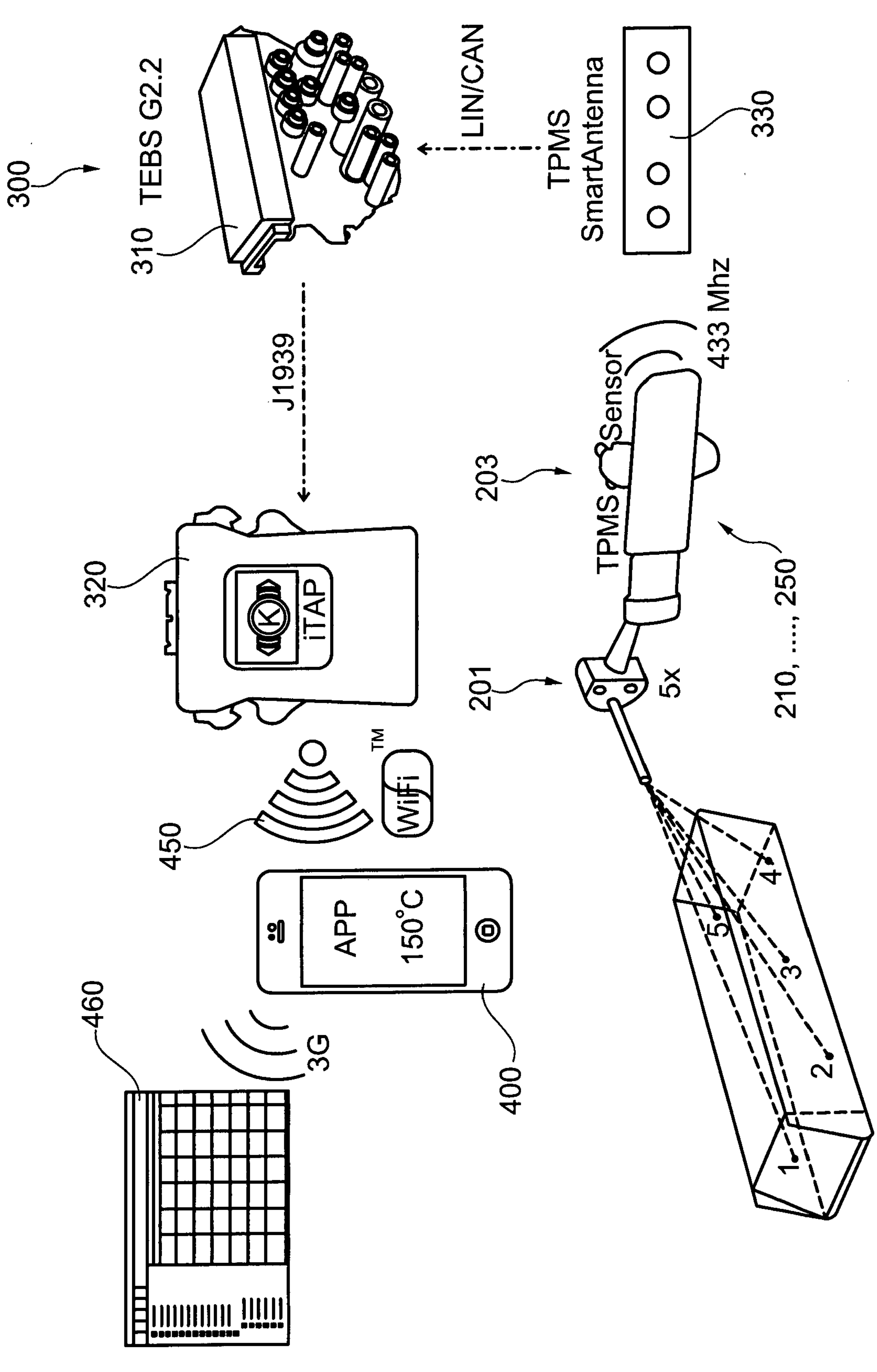
300
TEBS G2.2
310
LIN/CAN
TPMS
SmartAntenna
330
J1939
320
iTAP
450
WiFi
TM
400
APP
150°C
460
3G
203
TPMS Sensor
433 Mhz
201
5x
210, ...., 250
1
2
3
4
5

Fig. 3

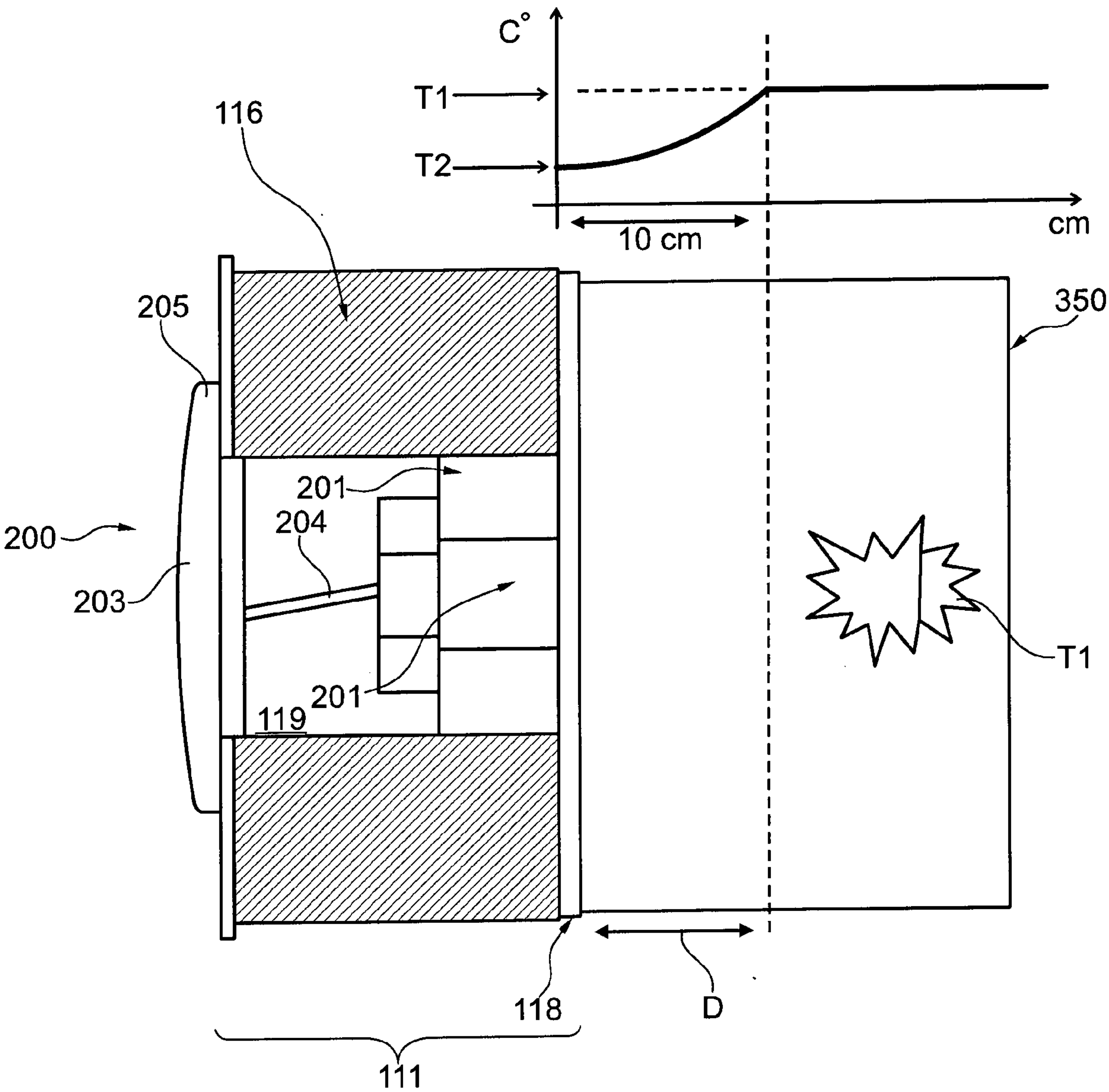


Fig. 4

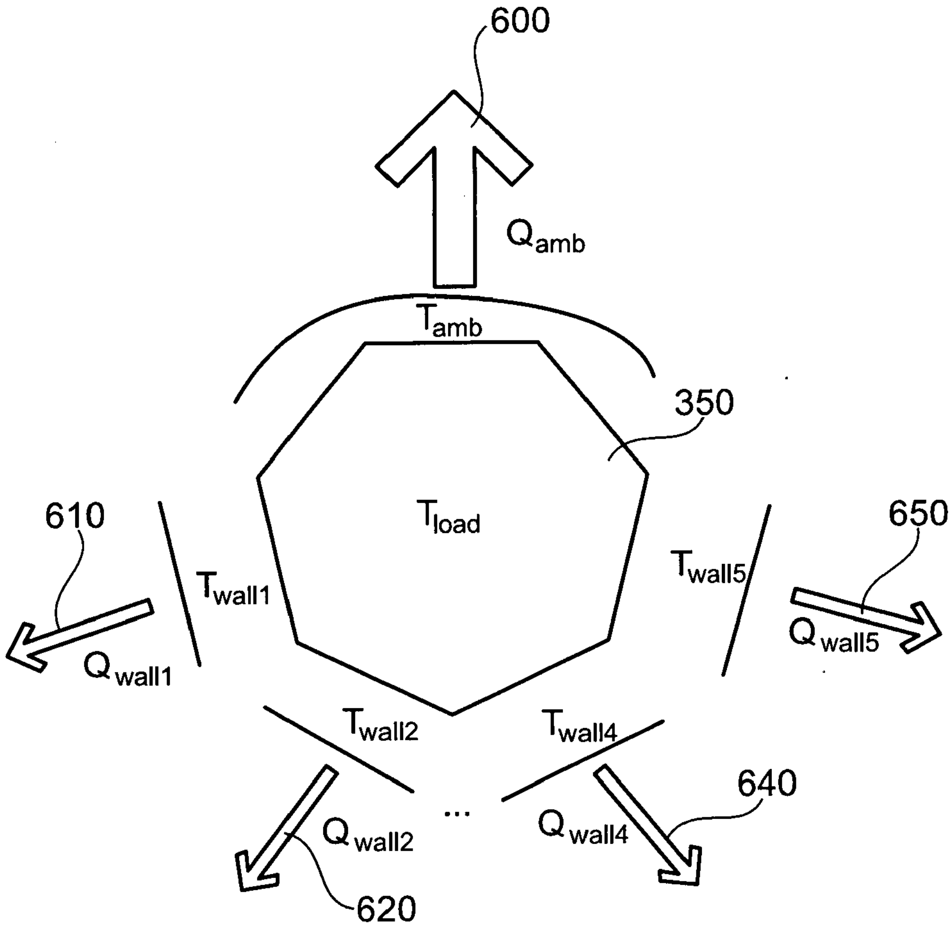
600
Q amb
T amb
350
T load
610
T wall1
Q wall1
650
T wall5
Q wall5
T wall2
T wall4
...
Q wall2
Q wall4
640
620

Fig. 5

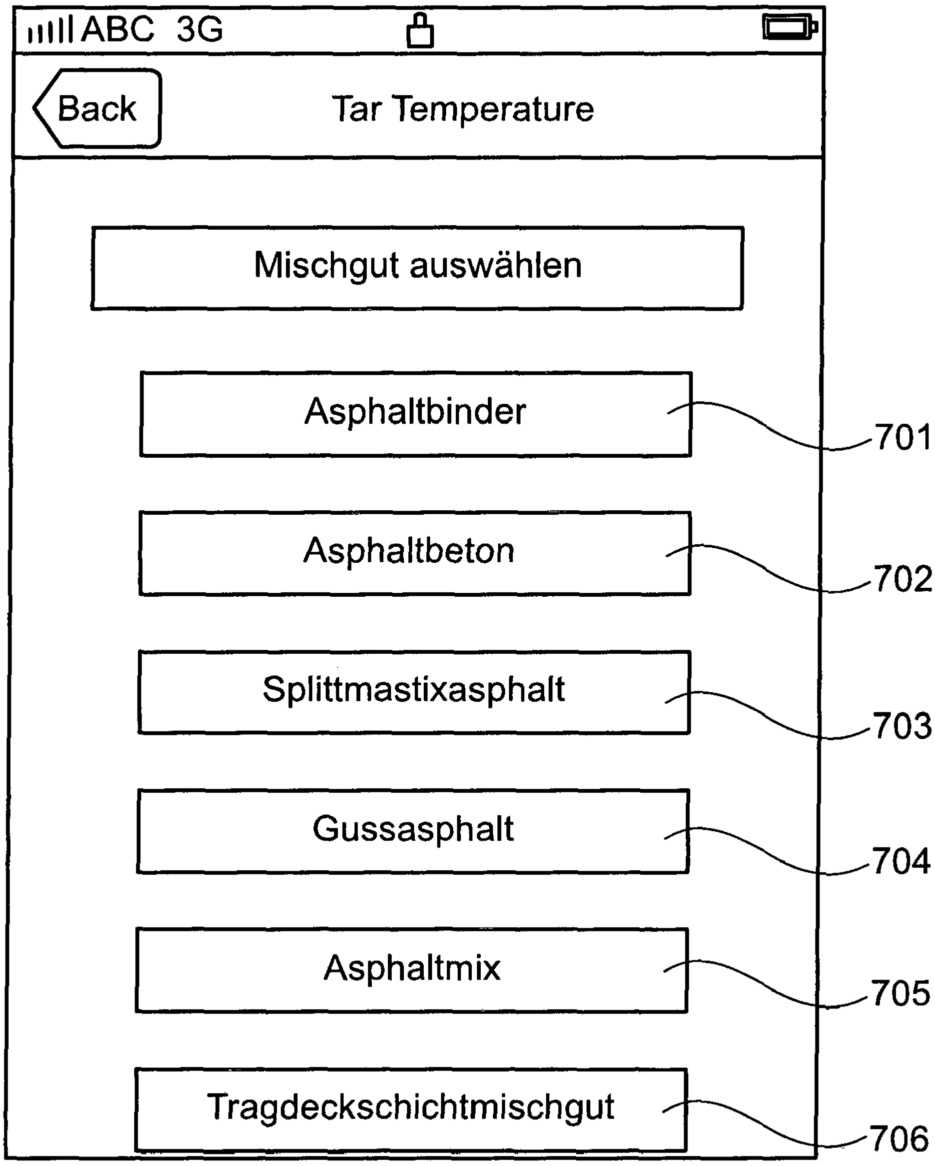
ABC 3G
Back
Tar Temperature
Mischgut auswählen
Asphaltbinder
Asphaltbeton
Splittmastixasphalt
Gussasphalt
Asphaltmix
Tragdeckschichtmischgut
701
702
703
704
705
706

Fig. 6

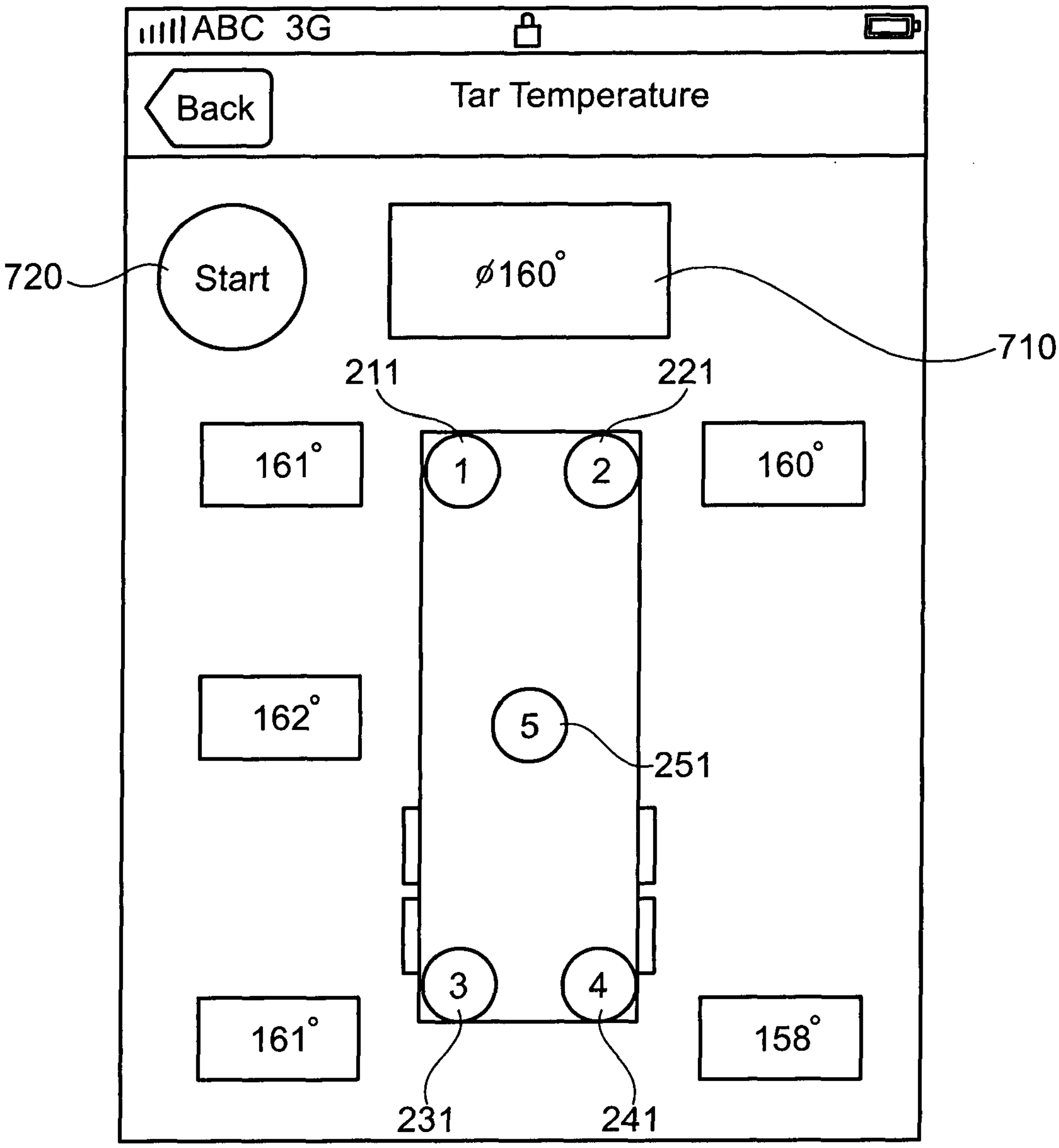

ABC 3G
Back
Tar Temperature
720
Start
ø160°
710
211
221
161°
1
2
160°
162°
5
251
3
4
161°
158°
231
241


Fig. 7

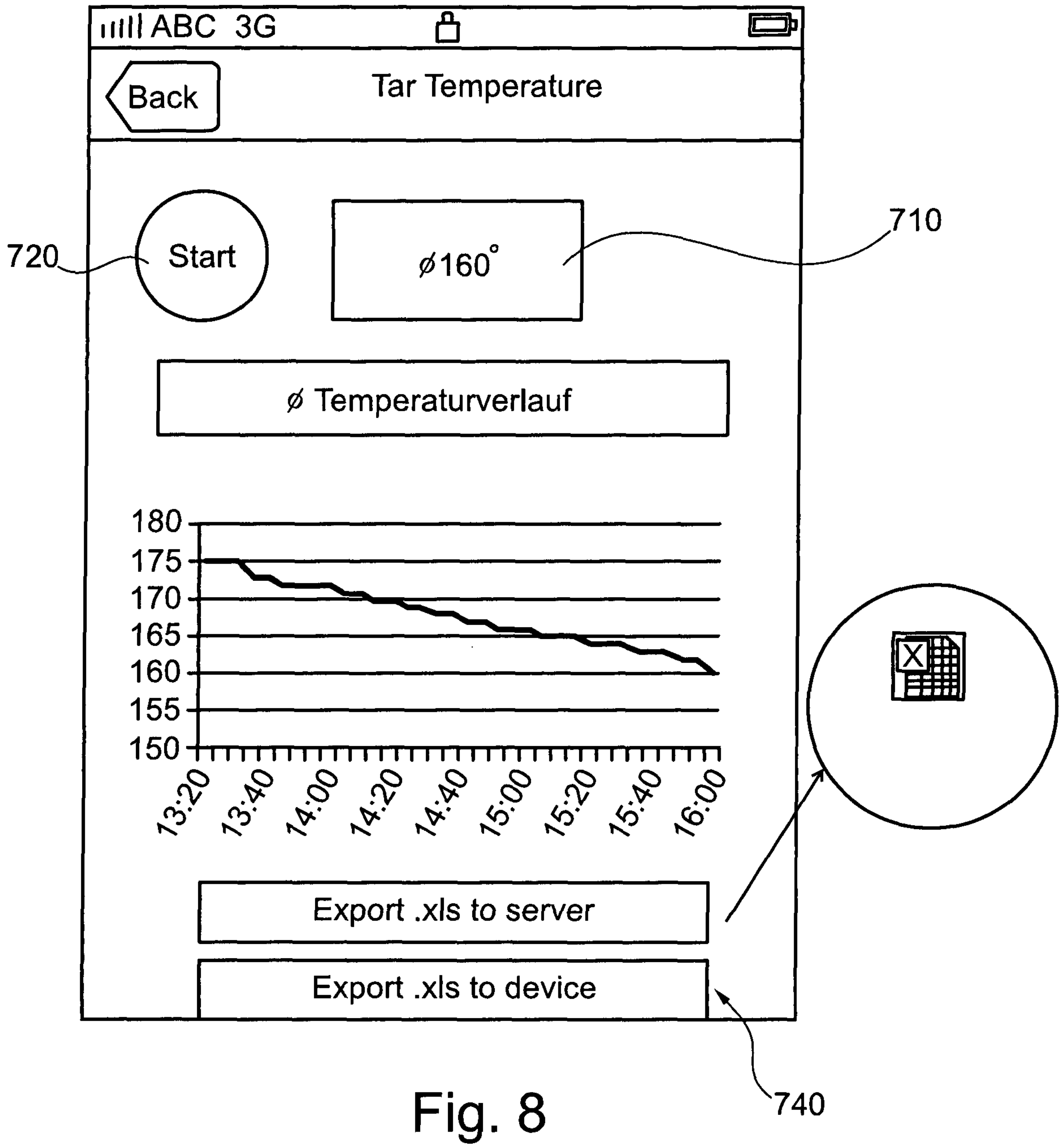
ABC 3G
Back
Tar Temperature
720
Start
ø160°
710
ø Temperaturverlauf
180
175
170
165
160
155
150
13:20
13:40
14:00
14:20
14:40
15:00
15:20
15:40
16:00
Export .xls to server
Export .xls to device
740

Fig. 8

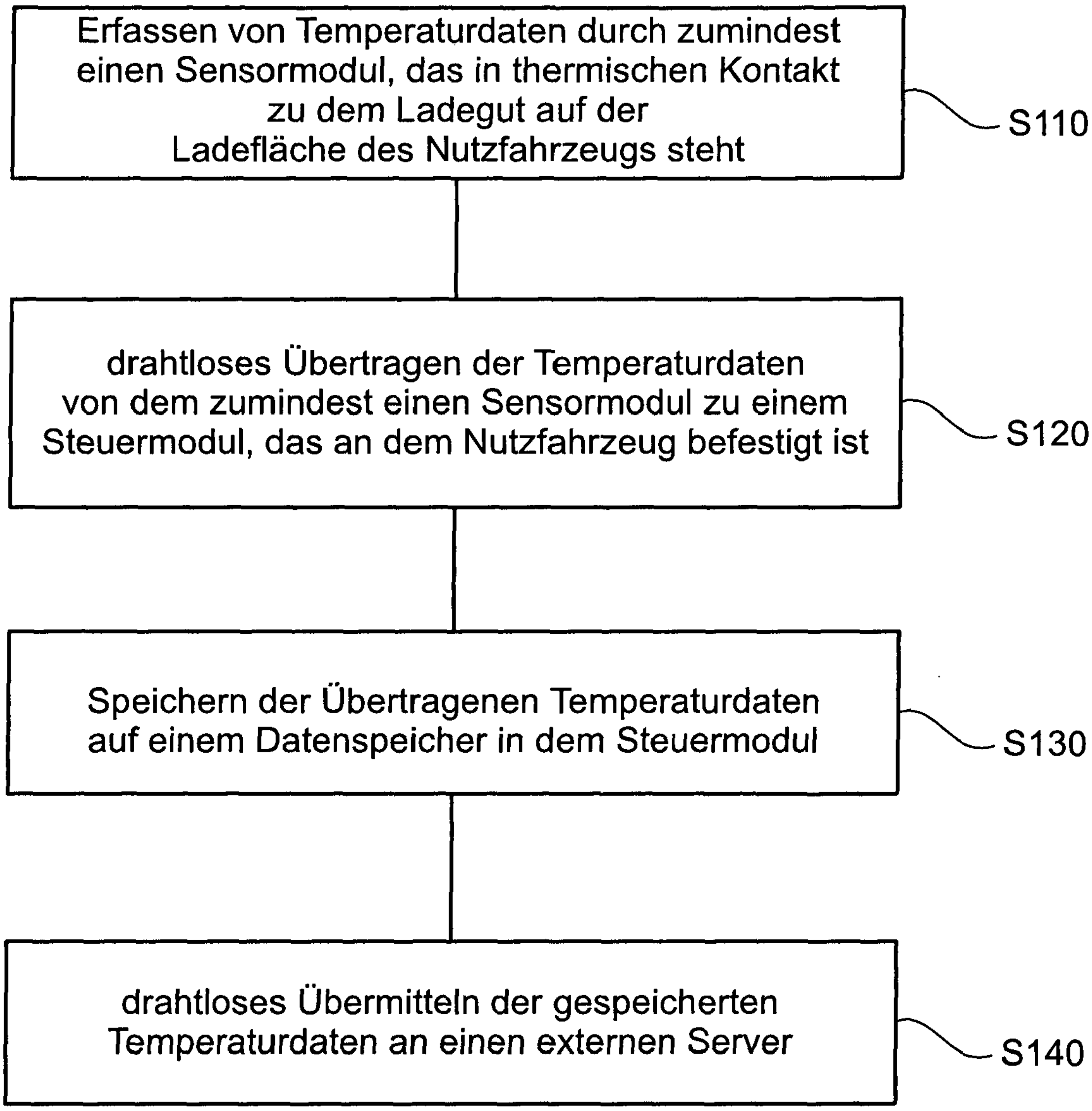
Erfassen von Temperaturdaten durch zumindest einen Sensormodul, das in thermischen Kontakt zu dem Ladegut auf der Ladefläche des Nutzfahrzeugs steht
S110
drahtloses Übertragen der Temperaturdaten von dem zumindest einen Sensormodul zu einem Steuermodul, das an dem Nutzfahrzeug befestigt ist
S120
Speichern der Übertragenen Temperaturdaten auf einem Datenspeicher in dem Steuermodul
S130
drahtloses Übermitteln der gespeicherten Temperaturdaten an einen externen Server
S140

Fig. 9

Europäisches Patentamt
European Patent Office
Office européen des brevets

# EUROPÄISCHER RECHERCHENBERICHT

Nummer der Anmeldung
EP 16 00 1191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 667 059 A1 (OMRON TATEISI ELECTRONICS CO [JP]) 7. Juni 2006 (2006-06-07)<br>* Absätze [0013] - [0035]; Abbildungen 1,5 *<br>----- | 1-14 | INV.<br>G01K1/02 |
| X | WO 2014/154765 A1 (GREENSYSTECH [FR]) 2. Oktober 2014 (2014-10-02)<br>* Seite 4, Zeile 20 - Seite 6, Zeile 21; Abbildungen 1-2 *<br>----- | 1,4,6-8,<br>12,14 | |
| | | | RECHERCHIERTE SACHGEBIETE (IPC) |
| | | | G01K |

Der vorliegende Recherchenbericht wurde für alle Patentansprüche erstellt

1

| Recherchenort | Abschlußdatum der Recherche | Prüfer |
|---|---|---|
| Den Haag | 22. September 2016 | Franche, Vincent |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 00 1191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2016

| Im Recherchenbericht angeführtes Patentdokument | Datum der Veröffentlichung | Mitglied(er) der Patentfamilie | Datum der Veröffentlichung |
|---|---|---|---|
| EP 1667059 A1 | 07-06-2006 | CN 1820290 A | 16-08-2006 |
| | | EP 1667059 A1 | 07-06-2006 |
| | | JP 2005071295 A | 17-03-2005 |
| | | US 2006264221 A1 | 23-11-2006 |
| | | WO 2005022430 A1 | 10-03-2005 |
| WO 2014154765 A1 | 02-10-2014 | EP 2979068 A1 | 03-02-2016 |
| | | FR 3003946 A1 | 03-10-2014 |
| | | US 2016084550 A1 | 24-03-2016 |
| | | WO 2014154765 A1 | 02-10-2014 |

EPO FORM P0461

Für nähere Einzelheiten zu diesem Anhang : siehe Amtsblatt des Europäischen Patentamts, Nr.12/82